# EUROPÄISCHE PATENTSCHRIFT

(11) **EP 0 465 418 B1**
(45) Veröffentlichungstag und Bekanntmachung des Hinweises auf die Patenterteilung: **17.08.1994**
(21) Anmeldenummer: 91810489.4
(22) Anmeldetag: 24.06.1991
(51) Int. Cl.: F16B 21/12, F16B 21/14

(54) **Vorstecker zum Sichern von Bolzen und Wellen**
Cotter pin for locking of bolts and shafts
Goupille pour bloquer des chevilles et des arbres

(30) Priorität: 29.06.1990 CH 2184/90
(43) Veröffentlichungstag der Anmeldung: 08.01.1992
(73) Patentinhaber: Weber, Heinrich, CH-8340 Hinwil (CH)
(72) Erfinder: Weber, Heinrich, CH-8340 Hinwil (CH)
(74) Vertreter: Gachnang, Hans Rudolf

(56) Entgegenhaltungen:
- EP-B- 0 054 487
- AT-B- 377 834
- AT-B- 392 675

## Beschreibung

Gegenstand der vorliegenden Erfindung ist ein Vorstecker zum Sichern von Bolzen und Wellen gemäss Oberbegriff des Patentanspruches 1.

Bolzen oder Wellen, mittels denen Maschinenelemente dauernd oder vorübergehend miteinander verbunden werden, müssen gegen axiale Verschiebung gesichert werden. Es ist aus der AT-B-392675 bekannt, in der Nähe des vorderen Endes eines solchen Bolzens eine diametral verlaufende Bohrung anzubringen und in diese einen weiteren Bolzen, genannt Vorstecker, hindurchzuschieben. Damit der Vorstecker sich durch Erschütterungen nicht lösen kann, ist es bekannt, an diesem einen Federbügel anzubringen, welcher nach dem Einschieben des Vorsteckers um den Kopf des Bolzens geschwenkt werden kann. Vorzugsweise sind diese Bügel aus Federstahl hergestellt, und deren Enden in versetzt angeordnete Bohrungen am Vorstecker gehalten, derart, dass ein Schwenken des Bügels nur unter Überwindung eines Totpunktes möglich ist. Diese bekannten Vorstecker erfüllen ihren Zweck einwandfrei. so lange sichergestellt ist, dass insbesondere bei land-oder forstwinschaftlichen Maschinen der Federbügel nicht an einem Ast oder Strauch hängenbleiben kann und dadurch aufgeklappt wird.
Es ist auch eine Rastsicherung für solche Federbügel auf dem Markt erhältlich, bei der anfänglich eine höhere Kraft zum Auslösen angewendet werden muss. Allerdings schützt diese Sicherung den Federbügel nicht gegen Lösen, wenn dieser beispielsweise an einem Ast einhängt. Insbesondere neigt die bekannte Sicherung nach einer gewissen Gebrauchsdauer dazu, die Federspannung zu verlieren.

Ausgehend von einem Vorstecker gemäss der AT-B-392675 liegt der Erfindung die Aufgabe zugrunde, den Vorstecker derart weiterzubilden, dass für Schwenkungen des Haltebügels nicht nur eine Federkraft zu überwinden ist, sondern das Lösen einer Arretierung erfordert. Gelöst wird die Aufgabe durch einen Vorstecker gemäss den Merkmalen des Anspruches 1.
Die haken- oder kammförmige Ausbildung mindestens eines der Enden des Haltebügels ermöglicht ein selbsttätiges Einrasten desselben und erlaubt das Lösen nur durch vorgängiges Verschieben des Bügels unter Überwindung einer Federkraft. Der Bügel kann sehr widerstandsfähig ausgebildet werden, da er zum Lösen nicht elastisch nachgebend sein muss. Das Lösen eines ringförmigen Bügels erfolgt durch Drehen desselben, dasjenige eines U-förmigen durch seitliches Verschieben des Haltebügels. Bei Verwendung eines Haltebügels mit rundem Querschnitt kann im Ende 9 des Vorsteckers eine runde Bohrung zur Arretierung angeordnet sein. Bei Verwendung eines Vieleckprofiles kann im Ende 9 vorzugsweise eine schlitzförmige Ausnehmung zum Einrasten ausgebildet werden. Bei einem durch Schmieden hergestellten Haltebügel kann der Haltebügel in einem Arbeitsgang haken- oder kammförmig angeformt werden. Wird der Haltebügel durch Biegen von Stangenmaterial hergestellt, so lässt sich der Haltebügel durch Umbiegen eines Endes erzeugen. Ist die Verwendung eines möglichst kurzen Bolzens vorteilhaft, so wird die Ausnehmung derart ausgebildet, dass die beiden Enden nebeneinander zu liegen kommen. Spielt die Länge des Bolzens keine Rolle, so können die beiden Enden in einer parallel zur Längsrichtung des Bolzens liegenden Ausnehmung in dessen Ende eingreifen. Damit der Bolzen möglichst in der Ebene durch den Haltebügel zu liegen kommt, ist an letzterem ein den Bolzen bogenförmig umgreifender Abschnitt angebracht. Im Gegensatz zu den herkömmlichen bekannten Vorsteckern kann der Querschnitt des Haltebügels demjenigen des Bolzens entsprechen. Es ergibt sich dadurch ein sehr starrer Aufbau.

Anhand eines illustrierten Ausführungsbeispieles wird die Erfindung näher erläutert. Es zeigen:
- Figur 1: eine Seitenansicht eines Bolzens mit einem Vorstecker.
- Figur 2: eine Draufsicht auf den Bolzen mit dem Vorstecker.
- Figur 3: eine vergrösserte Darstellung des Rastgliedes und des Rastmittels in Ansicht und
- Figur 4: eine Seitenansicht einer weiteren Ausführungsform eines Vorsteckers,
- Figur 5: eine Ansicht aus Richtung Pfeil A in Figur 4,
- Figur 6: eine Vorderansicht eines Bolzens mit Vorstecker in einer weiteren Ausgestaltung,
- Figur 7: eine Seitenansicht der Figur 6,
- Figur 8: eine Vorderansicht des Rastgliedes einer weiteren Ausführung und
- Figur 9: eine Seitenansicht der Figur 8.

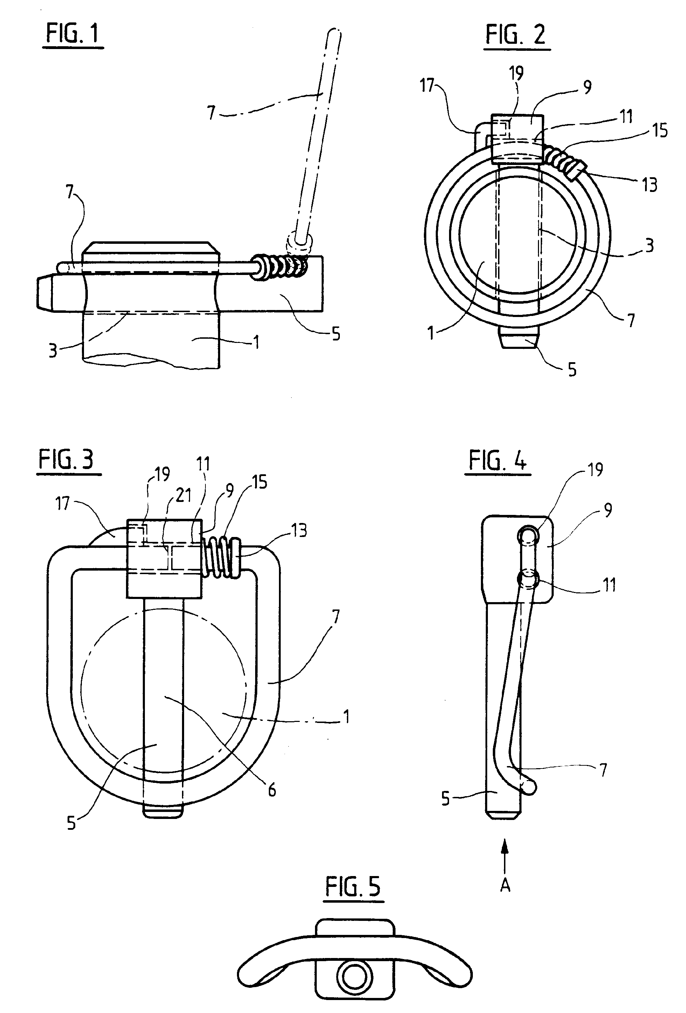

In der Nähe des Endes des in Figur 1 dargestellten Bolzens 1, z.B. einer Anhängerkupplung, ist eine diametral verlaufende Bohrung 3 angebracht, in welcher ein zylinderförmiger Vorstecker 5 mit einem Haltebügel 7 eingesetzt ist. Der Haltebügel 7 ist kreisring- oder U-förmig ausgebildet, besteht aus einem Rund- oder Vieleckprofil und umschlingt das Ende des Bolzens 1. Der Vorstecker 5 weist an demjenigen Ende 9, an welchem der Haltebügel 7 befestigt ist, vorzugsweise eine Verdickung auf. Im Ende 9 ist eine Bohrung 11 angebracht, durch welche der Haltebügel 7 hindurchgeführt ist. Das Einlegen des Haltebügels in die Bohrung 11 kann entweder dadurch erfolgen, indem der Haltebügel 7 aufgeschnitten und nach dem Hindurchführen wieder zu einem geschlossenen Ring verschweisst wird, oder im Ende 9 ist die Bohrung 11 anfänglich als seitliche Ausnehmung ausgestaltet, welche anschliessend durch einen Umformvorgang oder durch Verschweissen geschlossen wird. Am Haltebügel 7 ist ein Absatz 13 angebracht, an welchem eine den Haltebügel 7 umschlingende Schraubenfeder 15 in Anlage gelangt. Bei dem Absatz 13 kann es sich um die Schweissstelle handeln, welche zum Zusammenfügen der beiden zum Einführen in das Ende 9 geöffneten Enden angebracht worden ist. Es kann aber auch eine Lochscheibe aufgeschweisst oder ein Stift durch den Bügel 7 hindurchgeführt sein.

Auf der der Feder 15 gegenüberliegenden Seite des Endes 9 des Bolzens 5 ist am Haltebügel 7 ein Halteteil 17 angebracht, welches in eine Ausnehmung oder Bohrung 19 am Ende 9 eingreift. Das Halteteil 17 kann, wie in den Figuren 2 und 4 gezeigt, hakenförmig ausgebildet sein und in eine zylindrische Ausnehmung eingreifen (vgl. Figur 4). Anstelle eines hakenförmigen Halteteiles kann am Haltebügel 7 auch ein kammförmiger Halteteil 19 angebracht sein (Figur 3). Der kammförmige Halteteil 19 kann durch einen Kalt- oder Warmumformvorgang erzeugt oder angeschweisst werden. Im Ende 9 des Vorsteckers 5 ist in dieser Ausführungsform eine an den Querschnitt des kammförmigen Halteteiles 17 angebrachte Ausnehmung 19 eingelassen.

Im Gegensatz zum kreisringförmig ausgebildeten Haltebügel 7 in den Figuren 2 und 4 ist der Haltebügel gemäss Figur 3 U-förmig ausgestaltet. In Figur 3 ist mittels gebrochenen Linien 21 angedeutet, dass der Haltebügel 7 innerhalb der Bohrung 11 aufgetrennt sein kann; ein Verschweissen nach dem Einlegen in die Bohrung 11 würde dadurch entfallen. Diese Ausführung bringt so lange keine Nachteile wie die Festigkeit des Haltebügels 7 sehr gross ist.

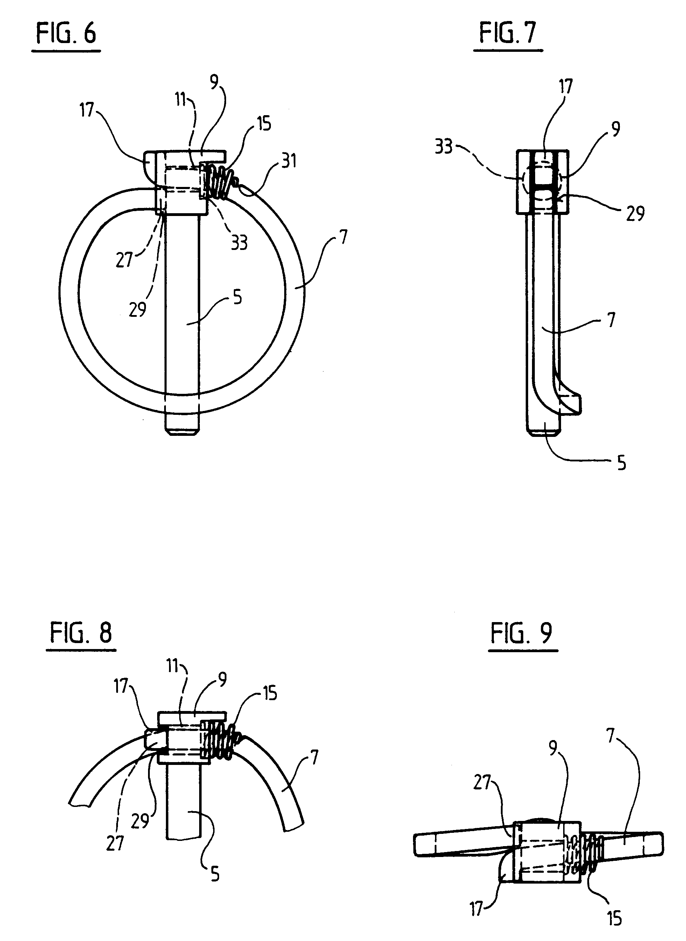

In der Ausgestaltung der Erfindung gemäss Figur 6 ist das Halteteil 17 des Haltebügels 7 durch Umbiegen oder Abkröpfen des Endes des Haltebügels 7 erzeugt worden. Das abgekröpfte Ende des Haltebügels 7 greift zusammen mit dem anderen Ende 27 des den Haltebügel 7 bildenden gebogenen Stahlprofiles in eine schlitzförmige Ausnehmung 29 am verdickten Ende 9 des Bolzens 5 ein. In einem Abstand vom abgekröpften, als Halteteil 17 wirkenden Ende ist eine Kerbe 31 im Haltebügel 7 eingelassen, in welcher das aussenliegende Ende der Feder 15 einrastet. Vorzugsweise ist das aussenliegende Ende der Feder 15 verjüngt, um eine möglichst hohe Anlagespannung in der Kerbe 31 aufzuweisen. Das innenliegende Ende der Feder 15 liegt direkt am oder in einer Ausnehmung 33 am Ende 9 des Bolzens 5.

In der Ausgestaltung der Erfindung gemäss den Figuren 8 und 9 ist das den Halteteil 17 bildende Ende des Haltebügels 7 nicht nach oben, d.h. in der Ebene des Haltebügels 7, sondern seitlich umgebogen und wird in der dort horizontal verlaufend angebrachten Ausnehmung 29 gehalten. Das Ende 27 des Haltebügels liegt demzufolge auf der gleichen Höhe und neben dem Halteteil 17 in der Ausnehmung 29.

Der Haltebügel 7 gemäss den Figuren 6 bis 9 kann werkzeugfrei und ohne nachträgliche Verschweissung in den Bolzen 5 eingeführt werden und wird in diesem nach dem Einrasten der Feder 15 an der Kerbe 31 gehalten. Der erfindungsgemässe Vorstecker wird wie folgt bedient: Ausgehend von einer Stellung, wie in strichpunktierten Linien in Figur 1 dargestellt, d.h. mit hochgeschwenktem Haltebügel 7, wird der zylindrische Abschnitt des Vorsteckers 5 durch die Bohrung 3 in die Bolzen 1 hindurchgeführt und anschliessend der Haltebügel 7 nach unten geschwenkt. Nach der Schwenkbewegung liegt der Haltebügel 7 im wesentlichen parallel zur Achse des Abschnittes 6 des Vorsteckers 5 (vgl. Figur 1) oder, wie in der Ausführung gemäss Figur 4 gezeigt, in der der Haltebügel 7 bogenförmig den zylindrischen Abschnitt 6 umgibt. Sobald der Haltebügel 7 im wesentlichen parallel zum Vorstecker 5 liegt, wird das Halteteil 17, d.h. der hakenförmige oder kammförmige Abschnitt, durch die Kraft der Feder 15 in die Ausnehmung 19 am Ende 9 hineingezogen. In der Ausführung gemäss den Figuren 2 und 4 erfolgt das Hineinschieben des Halteteiles 17 durch eine Rotationsbewegung des Haltebügels 7 im Uhrzeigersinn. In der Ausgestaltung nach Figur 3 zieht die Feder 15 den gesamten Haltebügel 7 im wesentlichen parallel zur Achse des Vorsteckers 5 durch die Bohrung 11, da der in der Bohrung 11 befindliche Abschitt gerade ist.
Sobald das Halteteil 17 sich innerhalb der Ausnehmung 19 befindet. kann der Haltebügel 7 nicht mehr geschwenkt werden. Die Ausnehmung 19 kann selbstverständlich auch seitlich oder nach unten ausgerichtet sein.
Der Haltebügel 7 ist vorzugsweise derart dimensioniert, dass bei eingerastetem Halteteil 17 eine Verbiegung des den Bolzen 1 umschlingenden Teiles bei üblicher Beanspruchung unmöglich ist. Grundsätzlich ist es möglich, den Bügel 7 aus einem Material herzustellen, das den gleichen oder den annähernd gleichen Querschnitt aufweist wie der zylindrische Teil 6 des Vorsteckers 5.
Zum Öffnen des Vorsteckers 5 wird der Haltebügel 7 federseitig gegen das Ende 9 gedrückt, bis das Halteteil 17 vollständig aus der Ausnehmung 19 ausgefahren ist. Danach lässt sich der Haltebügel 7 mit geringem Kraftaufwand schwenken.

## Patentansprüche

1. Vorstecker zum Sichern von Bolzen und Wellen mit einem am Vorstecker befestigten, um das Ende des Bolzens (5) schwenkbaren Haltebügel (7), der unter Überwindung einer Federkraft aus einer Halte- in eine Sicherungsstellung schwenkbar ist, dadurch gekennzeichnet, dass der Haltebügel (7) in einer Bohrung (11) an einem Ende (9) des zylindrischen Abschnittes (6) des Vorsteckers (5) verschiebbar geführt ist, dass am Haltebügel (7) zwischen einem Absatz (13) oder einer Kerbe (31) und dem Ende (9) eine Feder (15) eingesetzt ist, und dass auf der anderen, der Feder (15) gegenüberliegenden Seite des Endes (9) am Haltebügel (7) ein in einer Ausnehmung (19,29) im Ende (9) einrastbarer Halteteil (17) angebracht ist.

2. Vorstecker nach Anspruch 1, dadurch gekennzeichnet, dass der Haltebügel (7) ringförmig in sich geschlossen oder U-förmig und an den Schenkelenden durch einen letztere verbindenden Abschnitt miteinander verbunden ausgebildet ist.

3. Vorstecker nach einem der Ansprüche 1 oder 2, dadurch gekennzeichnet, dass der Haltebügel (7) aus einem Rund- oder Vieleckprofil besteht.

4. Vorstecker nach einem der Ansprüche 1 bis 3, dadurch gekennzeichnet. dass am Kopf des Vorsteckers (5) seitlich eine schlitzförmige Ausnehmung (19,29) angebracht ist.

5. Vorstecker nach Anspruch 4, dadurch gekennzeichnet, dass am Haltebügel (7) ein haken- oder kammförmiges Halteteil (17) angebracht oder durch Umbiegen eines Endes angeformt ist.

6. Vorstecker nach einem der Ansprüche 4 oder 5, dadurch gekennzeichnet, dass das Halteteil (17) durch einen Umformprozess aus dem Material des Haltebügels (7) erzeugt wird.

7. Vorstecker nach einem der Ansprüche 4 bis 6, dadurch gekennzeichnet, dass das Ende des Haltebügels (7) mit dem Halteteil (17) und das andere Ende (27) des Haltebügels (7) sich gegenseitig überlappen und über- oder nebeneinander in die Ausnehmung (19,29) einzugreifen bestimmt sind.

8. Vorstecker nach Anspruch 7, dadurch gekennzeichnet, dass die Ausnehmung (29) vertikal oder horizontal verläuft.

9. Vorstecker nach einem der Ansprüche 1 bis 8, dadurch gekennzeichnet, dass der Haltebügel (7) im Bereich der Auflage mit dem zylindrischen Abschnitt (6) des Vorsteckers (5) diesen bogenförmig umgreifend ausgebildet ist.

10. Vorstecker nach einem der Ansprüche 1 bis 9, dadurch gekennzeichnet, dass der Querschnitt des den Haltebügel (7) bildenden Profiles gleich oder annähernd gleich gross ist wie der Querschnitt des zylindrischen Abschnittes (6) des Vorsteckers (5).

## Claims

1. Cotter pin for securing bolts and shafts, having a retaining clamp (7) which is mounted on the cotter pin and pivotable about the end of the pin (5), said retaining clamp being pivotable from a retaining position into a securing position whilst overcoming a resilient force, characterised in that the retaining clamp (7) is displaceably guided in a bore (11) at one end (9) of the cylindrical portion (6) of the cotter pin (5), in that a spring (15) is fitted on the retaining clamp (7) between a shoulder portion (13) or a notch (31) and the end (9), and in that a retaining member (17), which is lockable in a recess (19, 29) in the end (9), is mounted on the retaining clamp (7) on the other side of the end (9) situated opposite the spring (15).

2. Cotter pin according to claim 1, characterised in that the retaining clamp (7) is annularly closed upon itself or has a U-shaped configuration with the arm ends interconnected by means of a portion which joins said ends.

3. Cotter pin according to one of claims 1 or 2, characterised in that the retaining clamp (7) comprises a circular or polygonal profile.

4. Cotter pin according to one of claims 1 to 3, characterised in that a slot-like recess (19, 29) is laterally provided in the head of the cotter pin (5).

5. Cotter pin according to claim 4, characterised in that a hook-like or comb-like retaining member (17) is mounted on the retaining clamp (7) or shaped to fit thereon by one end being bent thereover.

6. Cotter pin according to one of claims 4 or 5, characterised in that the retaining member (17) is produced from the material of the retaining clamp (7) by means of a reshaping process.

7. Cotter pin according to one of claims 4 to 6, characterised in that the end of the retaining clamp (7) provided with the retaining member (17) and the other end (27) of the retaining clamp (7) overlap each other and are intended to engage in the recess (19, 29) above or adjacent each other.

8. Cotter pin according to claim 7, characterised in that the recess (29) extends vertically or horizontally.

9. Cotter pin according to one of claims 1 to 8, characterised in that, in the region where the retaining clamp (7) is supported by the cylindrical portion (6) of the cotter pin (5), the retaining clamp (7) is adapted to engage around said cotter pin in an arcuate manner.

10. Cotter pin according to one of claims 1 to 9, characterised in that the cross-section of the profile forming the retaining clamp (7) is identical or approximately identical to the cross-section of the cylindrical portion (6) of the cotter pin (5).

## Revendications

1. Goupille permettant d'immobiliser des chevilles et des broches, comprenant un étrier de maintien (7) qui est fixé sur la goupille et est agencé de façon à pouvoir pivoter autour de l'extrémité de la goupille (5) et qui peut pivoter d'une position de maintien à une position d'immobilisation en vainquant la force d'un ressort, caractérisée en ce que l'étrier de maintien (7) est guidé de façon à pouvoir se déplacer d'une manière coulissante dans un alésage (11) ménagé à une extrémité (9) de la section cylindrique (6) de la goupille (5), en ce qu'un ressort (15) est monté sur l'étrier de maintien (7) entre une saillie (13) ou une encoche (31) et l'extrémité (9) et en ce qu'une partie de maintien (17), agencée de façon à pouvoir être enclenchée dans un évidement (19, 29) ménagé dans l'extrémité (9), est prévue sur l'étrier de maintien (7), de l'autre côté de l'extrémité (9) qui est situé à l'opposé du ressort (15).

2. Goupille selon la revendication 1, caractérisée en ce que l'étrier de maintien (7) est réalisé de façon à se fermer sur lui-même en forme d'anneau ou est réalisé en forme de U en étant réuni à lui-même par les extrémités de ses branches au moyen d'une section réunissant ces dernières.

3. Goupille selon l'une des revendications 1 et 2, caractérisée en ce que l'étrier de maintien (7) est constitué d'un élément profilé à section circulaire ou polygonale.

4. Goupille selon l'une des revendications 1 à 3, caractérisée en ce qu'un évidement (19, 29) en forme de fente est réalisé dans la tête de la goupille (5).

5. Goupille selon la revendication 4, caractérisée en ce qu'une partie de maintien (17) en forme de crochet ou de bossage est réalisée sur l'étrier de maintien (7) par pliage d'une extrémité ou est façonnée sur cet étrier de maintien.

6. Goupille selon l'une des revendications 4 et 5, caractérisée en ce que la partie de maintien (17) est produite par un procédé de déformation de la matière de l'étrier de maintien (7).

7. Goupille selon l'une des revendications 4 à 6, caractérisée en ce que l'extrémité de l'étrier de maintien (7) comportant la partie de maintien (17) et l'autre extrémité (27) de l'étrier de maintien (7) se chevauchent dans des sens opposés et sont conçues de façon à s'emboîter l'une au-dessus de l'autre ou l'une à côté de l'autre dans l'évidement (19, 29).

8. Goupille selon la revendication 7, caractérisée en ce que l'évidement (29) est orienté verticalement ou horizontalement.

9. Goupille selon l'une des revendications 1 à 8, caractérisée en ce que, dans la zone dans laquelle l'étrier de maintien (7) prend appui sur la section cylindrique (6) de la goupille (5), cet étrier de maintien (7) est réalisé de façon à entourer ladite section cylindrique (6) suivant la forme d'un arc.

10. Goupille selon l'une des revendications 1 à 9, caractérisée en ce que la section transversale de l'élément profilé constituant l'étrier de maintien (7) est identique ou pratiquement identique à la section transversale de la section cylindrique (6) de la goupille (5).
